(19) Europäisches Patentamt / European Patent Office / Office européen des brevets

(11) **EP 2 237 559 B1**

(12) **EUROPEAN PATENT SPECIFICATION**

(45) Date of publication and mention
of the grant of the patent:
**11.05.2016 Bulletin 2016/19**

(51) Int Cl.:
**H04N 19/527** *(2014.01)*   **H04N 19/59** *(2014.01)*
**H04N 19/577** *(2014.01)*   **H04N 19/533** *(2014.01)*

(21) Application number: **10156799.8**

(22) Date of filing: **17.03.2010**

(54) **Background motion estimate based halo reduction**

Estimation du mouvement de l'arrière-plan basé sur la réduction du halo

Halosenkung basierend auf der Hintergrundbewegungseinschätzung

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.03.2009 TR 200902469**

(43) Date of publication of application:
**06.10.2010 Bulletin 2010/40**

(73) Proprietor: **Vestel Elektronik Sanayi ve Ticaret A.S. 45030 Manisa (TR)**

(72) Inventors:
 • **Özkalayci, Burak Oguz**
  **45030, Manisa (TR)**
 • **Bastug, Ahmet**
  **45030, Manisa (TR)**

(74) Representative: **Cayli, Hülya**
 **Paragon Consultancy Inc.**
 **Koza Sokak No: 63/2**
 **GOP**
 **06540 Ankara (TR)**

(56) References cited:
 **WO-A1-2004/066624    WO-A2-2007/007225**
 **US-B1- 6 845 130    US-B2- 7 058 227**

 • **BARTELS EINDHOVEN UNIV OF TECHNOLOGY (NETHERLANDS) C ET AL: "Occlusion classifiers for picture rate conversion" VISUAL COMMUNICATIONS AND IMAGE PROCESSING; 20-1-2009 - 22-1-2009; SAN JOSE,, 20 January 2009 (2009-01-20), XP030081757**

 • **CHOI B-T ET AL: "NEW FRAME RATE UP-CONVERSION USING BI-DIRECTIONAL MOTION ESTIMATION" IEEE TRANSACTIONS ON CONSUMER ELECTRONICS, IEEE SERVICE CENTER, NEW YORK, NY, US LNKD-DOI:10.1109/30.883418, vol. 46, no. 3, 1 August 2000 (2000-08-01) , pages 603-609, XP001142884 ISSN: 0098-3063**

 • **GEORGE M ET AL: "Multi-resolution optical flow estimation using adaptive shifting", IMAGE PROCESSING, 1999. ICIP 99. PROCEEDINGS. 1999 INTERNATIONAL CONFERENCE ON - KOBE, JAPAN 24-28 OCT. 1999, IEEE, PISCATAWAY, NJ, USA, vol. 3, 24 October 1999 (1999-10-24), pages 717-721, XP010368736, DOI: 10.1109/ICIP.1999.817210 ISBN: 978-0-7803-5467-8**

 • **YU-CHUN PENG ET AL: "DSP Implementation of Digital Image Stabilizer", IEEE INTERNATIONAL CONFERENCE ON MULTIMEDIA AND EXPO, 2005. ICME 2005. AMSTERDAM, THE NETHERLANDS, 06-08 JULY 2005, IEEE, PISCATAWAY, NJ, USA, 6 July 2005 (2005-07-06), pages 808-811, XP010844279, DOI: 10.1109/ICME.2005.1521546 ISBN: 978-0-7803-9331-8**

 • **KO S-J ET AL: "DIGITAL IMAGE STABILIZING ALGORITHMS BASED ON BIT-PLANE MATCHING", IEEE TRANSACTIONS ON CONSUMER ELECTRONICS, IEEE SERVICE CENTER, NEW YORK, NY, US, vol. 44, no. 3, 1 August 1998 (1998-08-01) , pages 617-622, XP000851563, ISSN: 0098-3063, DOI: 10.1109/30.713172**

**Description**

**BACKGROUND MOTION ESTIMATE BASED HALO REDUCTION**

**Field of the Invention**

Generally, in motion compensated interpolation (MCI) schemes, a common problem is the so-called halo effect around the moving object boundaries. This halo effect is caused by covered and uncovered regions between two successive frames used for interpolation. Covering and uncovering may be caused by the speed difference between the foreground and background objects. In motion compensated, MC, interpolation schemes, covered regions may exist only in the previous frame and uncovered regions only in the next frame and therefore no block matching can be reliably established for them. The motion vectors of such covered and uncovered frames need to be calculated differently in order to minimize the halo effect.

Another cause of the halo effect is the block size used in motion estimation. Motion vectors are calculated on block basis rather than pixel basis. Thus, the motion vector resolution is much lower than the pixel resolution. If a part of foreground and background objects falls into the same block as in the boundaries, they are to be incorrectly assigned the same motion vector. Some schemes try to overcome this by using smaller blocks at the boundaries, such as disclosed in US-A-7,058,227.

There have been various attempts to reduce the halo effect in MCI. A first step is generally the localization of covered and uncovered areas (see for example US 6,219,436, US 6,771,799, US 7,058,227, US 6,487,313, WO-A-2007/119183). Once the problem areas are determined, the motion vectors in these areas may be determined using different methods. After all motion vectors including those of the covered/uncovered areas have been determined, usual frame interpolation may be done.

Covered/uncovered areas may be determined using motion vector field discontinuities. Large discontinuities, edges, in motion vector fields represent the covered/uncovered areas. For this reason, a true motion vector field may be established before the detection of problem areas. Although true motion estimation has not yet been perfectly accomplished, there are good approximates such as patented 3D recursive search described in G. de Haan, P.W.A.C Biezen, H. Huijgen, and O.A. Ojo, 'True Motion Estimation with 3-D Recursive Search Block-Matching', IEEE Tr. on Circuits and Systems for Video Technology, Vol. 3, October 1993, pp. 368-388. Another method to establish a true motion vector field uses a usual block matching followed by vector smoothing. The true motion vector field created by this method may however be less reliable. An increase in reliability of this method may be achieved if vectors of forward motion estimation (FME) from a previous frame to the next frame are used together with vectors of backward motion estimation from the next frame to the previous one, as described in US-A 6,005,639.

Another patent document no. WO 2004/066624 A1 discloses a method and a system for an up conversion operation. In this document, up conversion operation is done by using bidirectional motion vector fields of the blocks of a previous frame and current frame. For occlusion regions (cover and uncover areas), a background motion vector is used to generate motion vector fields. For non-occlusion regions, bidirectional motion vector field is used as vector field of the blocks. Said background motion vector is generated by using a pan-zoom model for the border blocks of the frame. Then, frame to be interpolated is generated according to vector fields of the each block. According to this document, not only border blocks of the frame, but also all the blocks of the frame can be used to generate background motion vector.

Another document related to state of the art is BARTELS EINDHOVEN UNIV OF TECHNOLOGY (NETHERLANDS) C ET AL: "Occlusion classifiers for picture rate conversion" VISUAL COMMUNICATIONS AND IMAGE PROCESSING; 20-1-2009 - 22-1-2009; SAN JOSE" 20 January 2009 (2009-01-20), XP030081757. In this document, a occlusion detection method for frame rate up conversions is disclosed. Said method uses a single input vector field estimated at the interpolation temporal instance, instead of two separate vector fields of current and next frames.

Patent document US6845130B1 discloses a method for motion estimation and compensation for video compression. According to this document, in order to reduce the number of motion vectors, a pyramidal structure is used. In said pyramidal structure, motion vectors are averaged for calculating upper level motion vectors.

Generally, the motion vectors on the cover/uncover regions should be assigned correctly to prevent halo effect for a motion compensated frame rate increasing interpolation. The cover/uncover regions arise at the edges of foreground and background objects and have a motion portrayal of the background region. In order to reduce the halo artifacts the background motion may be estimated and the motion vector of the cover/uncover regions may be updated correctly.

Summary

One or more embodiments of the present invention provide a cover-uncover region detection and motion estimation for these cover and uncover regions in motion containing videos. A method and device in accordance with embodiments of the invention aim at providing a reliable cover-uncover region detection and motion estimation for applying halo reduction algorithms efficiently.

In accordance with one or more embodiments, a background motion estimate based halo reduction is provided which may e.g. be applied for frame rate conversion interpolations.

In accordance with one or more embodiments of the invention, an aspect of a method or device provides detecting the cover and/or uncover regions with respect to an estimated global motion of e.g. a camera, imaging device or video, and updating the motion vector estimates according to classification of occlusion regions for more accurate motion-compensated interpolation.

The method and device according to one or more embodiments aim at, and provide, reduction of halo artifacts in the output of motion-compensated interpolation frame rate conversion applications, results or signals etc.

A method for motion-compensated interpolation is provided according to claim 1. A device for motion-compensated interpolation is provided according to claim 9.

In addition, a computer program or software or computer program product is provided according to claim 14. The program or program product may e.g. be provided or stored or storable on a computer readable storage medium.

Further features, aspects and advantages of embodiments of the invention will become apparent from the following detailed description of embodiments with reference to the drawings.

**Brief Description of the Drawings**

Fig. 1 shows a device or system of a halo reduced motion-compensated interpolation for frame rate conversion in accordance with one or more embodiments according to the invention,

Fig. 2 shows a schematic representation of a pyramidal structure,

Fig. 3 illustrates schematic drawings of cover and uncover regions,

Fig. 4 shows candidates arrangement,

Fig. 5 shows an example of a location of candidate motion vectors for uncover regions,

Fig. 6 shows an example of a location of candidate motion vectors for cover regions, and

Fig. 7 illustrates an embodiment of a method in accordance with the invention.

**Detailed Description of Embodiments**

In accordance with one or more embodiments, a motion-compensated image interpolation method, device or system may be utilized in frame rate conversion applications. For frame rate conversion applications the accuracy of the motion vector estimation plays an important role for synthesizing essentially natural, artifact free interpolated frames. The performance of frame based motion estimation algorithms degrades at the moving object boundaries (motion boundaries) according to occlusion phenomena. A reference search unit, which may generally be a e.g. rectangle shaped block, will be covered or uncovered in the next frame according to the direction of the motion.

A straightforward motion-compensated interpolation method may use a bidirectional interpolation like

$$I(x,t+0.5) = 0.5*(I(x-d,t)+I(x+d,t+1)) \qquad (1)$$

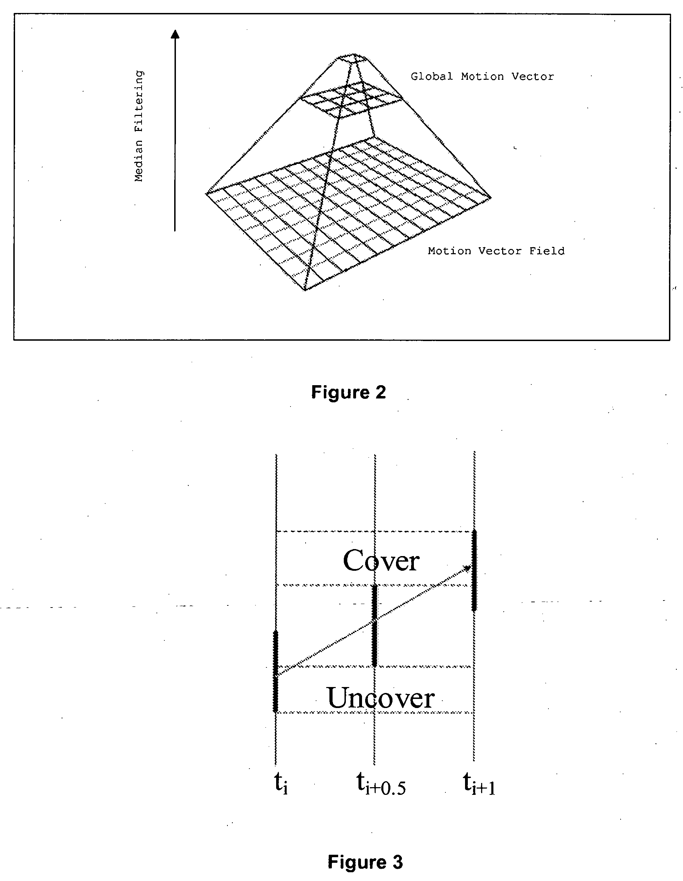

I indicates the intensity of the block or pixel, x the pixel, t the frame number, d the motion vector. Since the estimated motion vectors at the occlusion regions are unreliable such a bidirectional compensation method may mix the foreground and background objects intensities which causes a disturbing artifact called halo artifact. In order to remove or reduce the halo artifact, occlusion regions may be detected and classified as cover or uncover region and then the motion estimates of the occlusion regions can be updated with the background motion vector. The updated motion vectors may be compensated from the previous frame for cover and from the next frame for uncover regions. Fig. 3 illustrates examples of cover and uncover regions.

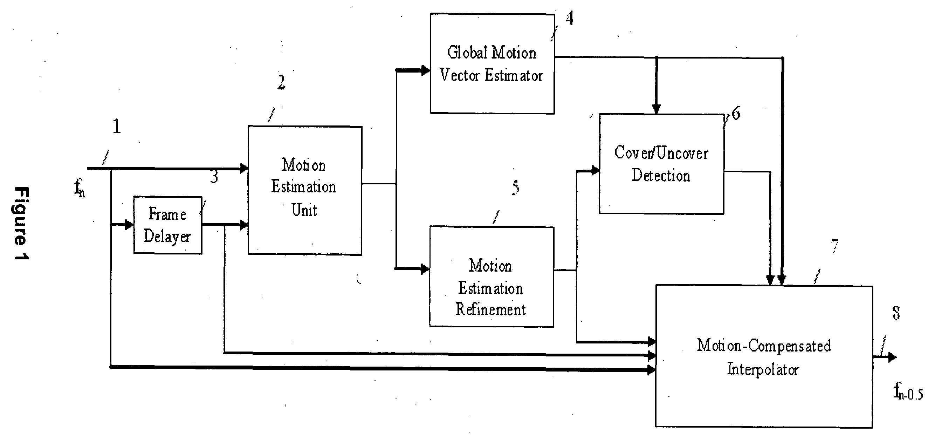

Fig. 1 shows an outline of an embodiment of a halo reduced motion-compensated interpolation method and device for frame rate conversion in accordance with the invention. A motion estimation unit (MEU) (2) receives frames via an input (1).The unit (2) receives two consecutive frames (fn) and makes a motion estimation between the previous frame (fn) and the next frame (fn+1) with a reference timing of the frame to be motion-compensated. Although any motion estimation algorithm can be used in this unit (2), a full block search method is utilized in this embodiment which minimizes the sum of absolute difference, SAD, metric given as

$$\sum_{x \in B} \left| I(x-d,t) - I(x+d,t+1) \right| \qquad (2)$$

Motion vector fields (MVF) estimated by unit (2) are fed to a global motion vector estimator (GMVE) (4) in order to generate a motion vector which describes the most general motion vector of the frame. An aim of the estimator (4) is estimating the direction of the background motion of the frame. In general the video contents follow the motion of the foreground object in order to keep the attention of the audience at the foreground object. Hence a rough initial estimate of the motion vectors of the occlusion regions arising at the boundaries of the foreground object is provided and estimated by the GMVE estimator (4). The GMVE unit (4) creates a pyramidal structure above the block grid of the frame which ends up with a unique element at the top.

In Fig. 2, an example of a schematic representation of such a pyramidal structure is shown. Each block at the higher level is connected to a group of blocks at the lower level. Motion vector of each block at the higher level is acquired by median filtering of the x and y components of the motion vectors in the group of blocks at the lower level separately. The median filtering and pyramidal structure gives the dominant motion in the frame which is in most cases the background motion.

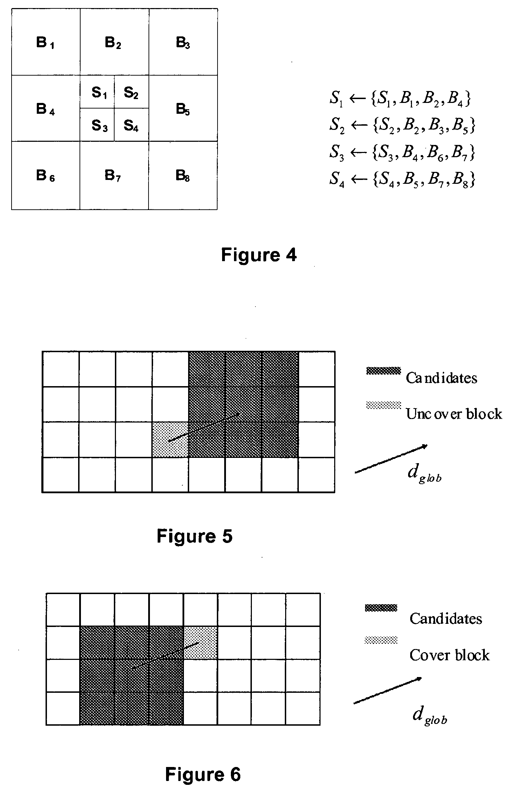

Since the occlusion regions occur at the object boundaries, it is of advantage to have a motion vector field MVF that can differentiate the object boundaries. However block based motion estimation algorithms may suffer to assign a single motion vector to blocks which contain object boundaries. In order to have more reliable motion estimates at the object boundaries and have more precise motion estimates for all other regions a MVF refinement is done at block (5). At every refinement level the blocks are divided into e.g. four sub-blocks and the neighboring motion vectors for each sub-block are tried for better bidirectional matching. If the initial block size was set to 16x16, after a two level refinement the MVF resolution will be 4x4 block size. The candidate motion vector set for each sub-block is shown in Fig. 4.

A cover/uncover detection unit (CUDU) (6) shown in Fig. 1 is connected to the outputs of units (4, 5), and detects and classifies the occlusion regions as cover and uncover based on the orientation of the motion vectors with respect to their neighbors. In order to find the occlusion regions the discontinuities in the MVF are utilized since they generally coincide with the object boundaries. However the bidirectional matching criteria at the cover and uncover regions are not reliable since the region to be matched is missing in the previous or next frame. Hence the difference between the neighboring blocks in the direction of the global motion vector estimated by the GMVE is more reliable to detect the discontinuities in the MVF.

The occlusion detection and cover/uncover classification is done by the rule given below

$$d_{diff} = d(x + \lambda d_{glob}) - d(x - \lambda d_{glob})$$

If $d_{diff} \bullet d_{glob} < 0$ and $\sum_{x \in B} \left| I(x-\alpha d,t) - I(x+(1-\alpha)d,t+1) \right| > T_{occ} \rightarrow$ Cover

If $d_{diff} \bullet d_{glob} > 0$ and $\sum_{x \in B} \left| I(x-\alpha d,t) - I(x+(1-\alpha)d,t+1) \right| > T_{occ} \rightarrow$ Uncover

where $d_{glob}$ is the global motion vector estimate, $\lambda$ is a motion vector scaling coefficient, is dot product of vectors and $T_{occ}$ is a threshold for bidirectional SAD (sum of absolute differences) cost of the block.

A motion-compensated interpolation unit (MCIU) (7) is connected to the input (1) and the outputs of units (3, 4, 5, 6) and makes bidirectional interpolation as given in equation 1. However for the cover and uncover assigned blocks the MCIU unit (7) updates the motion vector estimates of the blocks from some defined candidate sets according to their cover/uncover assignment and makes one directional interpolation. There is no matching criteria for updating the motion vectors of the cover/uncover regions since those regions only exist in one of the frames. However since cover and uncover regions are behind some foreground object it is much probable that the motion of the cover and uncover regions is similar to the background motion. For this reason the motion vectors of uncover regions are updated with a reliable motion vector similar or identical to the estimated background motion.

As mentioned above the reliability of the motion vectors of occlusion regions can not be checked with a matching metric in bidirectional compensation, hence the reliability of the motion vectors are checked with their bidirectional matching errors at their source locations. For the uncover regions the source locations of the candidate motion vectors are the neighboring blocks in the direction of the background motion which is estimated as $d_{glob}$. For the cover regions the source locations of the candidate motion vectors are the neighboring blocks in the reverse direction of the background motion which is estimated as $d_{glob}$. In order to eliminate the motion vectors that may represent the motion of the foreground object a threshold is utilized for the differences between the candidate motion vector and $d_{glob}$. After discarding the motion vectors that differ largely from the background motion, the motion vector with a small or the minimum matching error in bidirectional matching is selected for the new motion vector for the uncover/cover block.

The location of the candidate motion vectors are illustrated in Fig. 5 for a cover case and in Fig. 6 for an uncover case. In case of no motion vector candidate is left after the thresholding no update is done for the motion vector of the occlusion region. After the motion vector update step the one directional interpolation is done for the occlusion regions. For the uncover regions motion compensation is done from the next frame and for the cover regions motion compensation is done from previous frame.

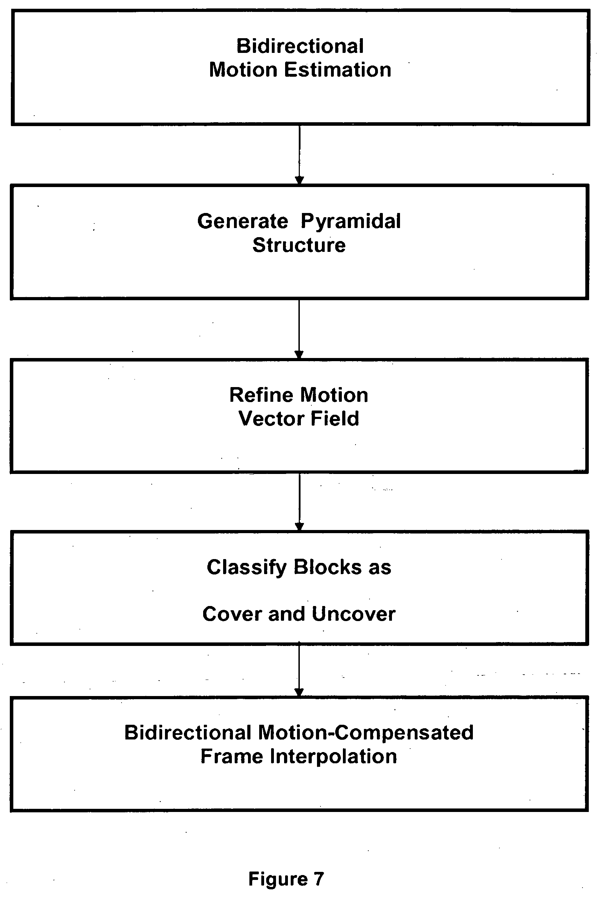

An example of a method in accordance an embodiment of the invention is shown in Fig. 7 as described in the following step by step.

Step 1: Make a bidirectional motion estimation, BiME, between previous and next frames of a video stream or any other type of frame sequences at the input (1). In this embodiment it is assumed that a block based full search motion estimation is done at this step. The output of this step will be called Motion Vector Field (MVF, $d$).

Step 2: In order to get a global motion vector estimate, which will be used as background motion estimate, a pyramidal structure above the motion vector field of BiME is generated, and a median filtering is made separately or jointly on x and y components of the vectors to get higher level motion vector fields of the pyramid. The top of the pyramid ends with a single motion vector which is called $d_{glob}$.

Step 3: A motion vector field refinement is provided by dividing each block into a number, e.g. four or any larger or smaller number, of sub-blocks at every refinement level and assigning the motion vector of the sub-block which has the least matching error among the candidate set. A look up table (LUT) of the candidate set for each sub-block is given in Fig. 5.

Step 4: The blocks are classified as cover and uncover which satisfy the following equations.

$$d_{diff} = d(x + \lambda d_{glob}) - d(x - \lambda d_{glob})$$

$$\text{If } d_{diff} \cdot d_{glob} < 0 \quad \text{and} \quad \sum_{x \in B} \left| I(x - \alpha d, t) - I(x + (1-\alpha)d, t+1) \right| > T_{occ} \rightarrow \quad \text{Cover}$$

$$\text{If } d_{diff} \cdot d_{glob} > 0 \quad \text{and} \quad \sum_{x \in B} \left| I(x - \alpha d, t) - I(x + (1-\alpha)d, t+1) \right| > T_{occ} \rightarrow \quad \text{Uncover}$$

Step 5: A bidirectional motion-compensated frame interpolation is made for each block. If the block is neither assigned as cover nor uncover than

$$I(x, t + 0.5) = 0.5 * (I(x - d_{bi}, t) + I(x + d_{bi}, t+1))$$

Else, if the block is, in step 5, assigned as cover

- Update $d \leftarrow d_c$ where $d_c$ is the motion vector which is similar to $d_{glob}$ and has a reliable bidirectional matching error among the motion vector candidate update set. The motion vector candidate set is the motion vectors of the e.g. 3x3 sub-block region located at the reverse direction of the $d_{glob}$.

Fig. 6 shows the locations of the candidate set. The similarity of the $d_c$ vector to $d_{glob}$ is satisfied by the condition $\|d_c\text{-}d_{glob}\|<T_{sim}$, and among the vectors satisfying this condition the one having the least bidirectional matching error is selected. The one directional motion-compensation is done as given below.

$$I(x,t+0.5) = I(x-d_c,t)$$

Else, if the block is, in step 5, assigned as uncover

- Update $d \leftarrow d_c$ where $d_c$ is the motion vector which is similar to $d_{glob}$ and has a reliable bidirectional matching error among the motion vector candidate update set. The motion vector candidate set is the motion vectors of the e.g. 3x3 sub-block region located at the direction of the $d_{glob}$.

The Figure 5 shows the locations of the candidate set. The similarity of the $d_c$ vector to $d_{glob}$ is satisfied by the condition $\|d_c\text{-}d_{glob}\|<T_{sim}$, and among the vectors satisfying this condition the one having the least bidirectional matching error is selected. The one directional motion-compensation is done as given below.

$$I(x,t+0.5) = I(x+d_c,t+1)$$

The device shown in Fig. 1 may also be implemented in a different manner such as a distributed system or as an apparatus or part of a device or apparatus such as a controller or processor.

Any of the units, steps, features or functions mentioned above may be implemented as hardware structures or in form of a software implementations such as computer implementable programs or routines or a computer program product. Such a computer program may e.g. be stored on a computer-readable storage medium or in any other form. Further, embodiments of the invention my include only one of the above mentioned units, steps, features or functions, or more or all of the above mentioned units, steps, features or functions in any arbitrary combinations.

## Claims

1. Method for motion-compensated interpolation, comprising:

   - receiving two consecutive frames, the previous f(n) and the next frame f(n+1) to the frame to be interpolated f(n+α),
   - generating a motion vector field by making a bidirectional motion estimation between the previous and next frame with a reference timing of the frame to be interpolated,
   - generating a global motion estimation based on the generated motion vector field,
   - using the global motion estimation as a background motion estimate,
   - classifying the blocks as cover and uncover or neither cover nor uncover,
   - updating the motion estimates of cover and uncover blocks according to the generated global motion estimation;
   - updating the motion estimates of neither cover nor uncover blocks according to the generated motion vector field;
   - generating the frame to be interpolated according to updated motion estimates of each block
   - **characterized in that** generating said global motion estimation comprises the steps of;
   - generating a pyramidal structure above the motion vector field of the bidirectional motion estimation wherein each block at the higher level of the pyramidal structure is connected to a group of blocks at the lower level,
   - applying a median filtering on x and y components of vectors in the group of blocks at the lower level separately to generate higher level motion vector fields of the pyramidal structure, and
   - providing at the top of the pyramidal structure a single motion vector $d_{glob}$, which is used as the global motion estimation.

2. Method according to claim 1, wherein the bidirectional motion estimation is a block based full search motion estimation.

3. Method according to claim 1 or 2, wherein generating of a global motion estimation comprises generating a global motion vector estimate.

4. Method according to any one of the preceding claims, comprising providing a motion vector field refinement.

5. Method according to claim 4, wherein the motion vector field refinement is provided by dividing each block into a number of sub-blocks at every refinement level and assigning the motion vector of the sub-block which has the least matching error among a candidate set, wherein a look up table of the candidate set for each sub-block may be provided.

6. Method according to any one of the preceding claims, wherein in the classifying of the blocks as cover and uncover or neither cover nor uncover, blocks are classified as cover and uncover which satisfy the following equations:

$$d_{diff} = d(x + \lambda d_{glob}) - d(x - \lambda d_{glob})$$ ,

wherein,

- if $d_{diff} \bullet d_{glob} < 0$ and $\sum_{x \in B} |I(x - \alpha d, t) - I(x + (1-\alpha)d, t+1)| > T_{occ} \rightarrow$ the block is classified as cover,

or

- if $d_{diff} \bullet d_{glob} > 0$ and $\sum_{x \in B} |I(x - \alpha d, t) - I(x + (1-\alpha)d, t+1)| > T_{occ} \rightarrow$ the block is classified as uncover

wherein is dot product of vectors.

7. Method according to claim 6, wherein comprising, in providing a bidirectional motion-compensated frame interpolation for each block, at least one or more, in any arbitrary combination, of the following:

if the block is neither assigned as cover nor uncover then

$$I(x, t + 0.5) = 0.5 * (I(x - d_{bi}, t) + I(x + d_{bi}, t+1))$$

if the block is assigned as cover,
update $d \leftarrow d_c$ where $d_c$ is a motion vector which has a reliable bidirectional matching error, or a matching error below a defined threshold, among a motion vector candidate update set located in the reverse direction of a global motion vector $d_{glob}$,
wherein the motion vector candidate update set optionally comprises the motion vectors of a sub-block region located in the reverse direction of the global motion vector $d_{glob}$,
if the block is assigned as uncover,
update $d \leftarrow d_c$ where $d_c$ is the motion vector which is similar to $d_{glob}$ and has a reliable bidirectional matching error among a motion vector candidate update set located in the direction of the $d_{glob}$.

8. Method according to any one of the preceding claims, wherein among the vectors satisfying a condition $\|d_c - d_{glob}\| < T_{sim}$, the vector having the least bidirectional matching error is selected.

9. Device for motion-compensated interpolation, comprising:

- means (1) for receiving two consecutive frames, the previous f(n) and the next frame f(n+1) to the frame to be interpolated f(n+α)
- means (2) for generating a motion vector field by making bidirectional motion estimation between the previous and next frame with a reference timing of the frame to be interpolated
- means (4) for generating a global motion estimation based on the generated motion vector field and means for using the global motion estimation as a background motion estimate,
- means (6) or classifying the blocks as cover and uncover or neither cover nor uncover, and

- means for updating the motion estimates of cover and uncover blocks according to the generated global motion estimation,
- means for updating the motion estimates of neither cover nor uncover blocks according to the generated motion vector field, and
- means (8) for generating the frame to be interpolated according to updated motion estimates of each block

**characterized by**

- means for generating a pyramidal structure above the motion vector field of the bidirectional motion estimation wherein each block at the higher level is connected to a group of blocks at the lower level,
- means for applying a median filtering on x and y components of vectors in the group of blocks at the lower level separately to generate higher level motion vector fields of the pyramidal structure, and
- means for providing at the top of the pyramidal structure a single motion vector $d_{glob}$, which is used as the global motion estimation.

10. Device according to claim 9, wherein the means (4) for generating of a global motion estimation comprises means for generating a global motion vector estimate.

11. Device according to claim 9 or 10, comprising means (5) for providing a motion vector field refinement, wherein the means for providing the motion vector field refinement optionally comprise means for dividing each block into a number of sub-blocks at every refinement level and assigning the motion vector of the sub-block which has the least matching error among a candidate set, wherein a look up table of the candidate set for each sub-block is optionally provided.

12. Device according to any one of claims 9 to 11, wherein the means (6) for classifying the blocks as cover and uncover or neither cover nor uncover, is configured to classify blocks as cover and uncover which satisfy the following equations:

$$d_{diff} = d(x + \lambda d_{glob}) - d(x - \lambda d_{glob})$$,

wherein, if $d_{diff} \bullet d_{glob} < 0$ and $\sum_{x \in B} |I(x - \alpha d, t) - I(x + (1 - \alpha)d, t + 1)| > T_{occ} \rightarrow$ the block is classi-

fied as cover, or if $d_{diff} \bullet d_{glob} > 0$ and $\sum_{x \in B} |I(x - \alpha d, t) - I(x + (1 - \alpha)d, t + 1)| > T_{occ} \rightarrow$ the block is

classified as uncover wherein is dot product of vectors.

13. Device according to any one of claims 9 to 12, comprising means (7) configured to, in providing a bidirectional motion-compensated frame interpolation for each block, at least one or more, in any arbitrary combination, of the following:

if the block is neither assigned as cover nor uncover then

$$I(x, t + 0.5) = 0.5 * (I(x - d_{bi}, t) + I(x + d_{bi}, t + 1))$$

if the block is assigned as cover,
update $d \leftarrow d_c$ where $d_c$ is a motion vector which has a reliable bidirectional matching error, or a matching error below a defined threshold, among a motion vector candidate update set located in the reverse direction of a global motion vector $d_{glob}$, wherein the motion vector candidate update set optionally comprises the motion vectors of a sub-block region located in the reverse direction of the global motion vector $d_{glob}$,
if the block is assigned as uncover,
update $d \leftarrow d_c$ where $d_c$ is the motion vector which is similar to $d_{glob}$ and has a reliable bidirectional matching error among a motion vector candidate update set located in the direction of the $d_{glob}$, wherein the motion vector candidate update set optionally comprises the motion vectors of a sub-block region located in the direction of the global motion vector $d_{glob}$.

**14.** A computer program product, comprising software for motion-compensated interpolation, the software comprising software portions for carrying out the steps according to any one of claims 1 to 8.

**15.** A computer program product according to claim 14, embodied on a computer-readable medium.

**Patentansprüche**

**1.** Vefahren zur bewegungskompensierten Interpolation, mit

- Empfangen von zwei konsekutiven Bildern, das vorangegangene f(n) und das nachfolgende Bild f(n+1) des zu interpolierenden Bildes f(n+$\alpha$),
- Erzeugen eines Bewegungsvektorenfelds durch Anwenden einer bidirektionalen Bewegungseinschätzung zwischen dem vorangegangenen und dem nachfolgenden Bild mit einer Referenzzeit des zu interpolierenden Bilds,
- Erzeugen einer globalen Bewegungseinschätzung, basierend auf dem erzeugten Bewegungsvektorenfeld,
- Verwenden der globalen Bewegungseinschätzung als Hintergrundbewegungseinschätzung,
- Klassifizieren der Blöcke als bedeckt und unbedeckt oder als weder bedeckt noch unbedeckt,
- Aktualisieren der Bewegungseinschätzungen von bedeckten und unbedeckten Blöcken entsprechend der generierten globalen Bewegungseinschätzung,
- Aktualisieren der Bewegungseinschätzungen von weder bedeckten noch unbedeckten Blöcken entsprechend des generierten Bewegungsvektorenfelds,
- Erzeugen des entsprechend der aktualisierten Bewegungseinschätzungen jedes Blocks zu interpolierenden Bilds, **dadurch gekennzeichnet, dass** das Erzeugen der globalen Bewegungseinschätzung die folgenden Schritte umfasst:
- Erzeugen einer pyramidalen Struktur über dem Bewegungsvektorfeld der bidirektionalen Bewegungseinschätzung, wobei jeder Block der höheren Ebene der pyramidalen Struktur mit einer Gruppe von Blöcken der niedrigeren Ebene verbunden ist,
- separates Anwenden einer Medianfilterung auf x- und y-Komponenten von Vektoren der Gruppe von Blöcken der unteren Ebene, um Bewegungsvektorfelder einer höheren Ebene der pyramidalen Struktur zu erzeugen, und
- Bereitstellen eines Einzelbewegungsvektors $d_{glob}$ an der Spitze der pyramidalen Struktur, der als die globale Bewegungseinschätzung verwendet wird.

**2.** Verfahren nach Anspruch 1, wobei die bidirektionale Bewegungseinschätzung eine blockbasierte Vollsuchbewegungseinschätzung (full search motion estimation) ist.

**3.** Verfahren nach Anspruch 1 oder 2, wobei das Erzeugen einer globalen Bewegungseinschätzung das Erzeugen einer globalen Bewegungsvektoreinschätzung umfasst.

**4.** Verfahren nach einem der vorgehenden Ansprüche, mit einer Bewegungsvektorfeldverfeinerung.

**5.** Verfahren nach Anspruch 4, wobei die Bewegungsvektorfeldverfeinerung bereitgestellt wird durch Unterteilen jedes Blocks in eine Anzahl von Unterblöcken jeder Verfeinerungsebene und Zuordnen des Bewegungsvektors des Unterblocks, der den geringsten Übereinstimmungsfehler innerhalb eines Kandidatensatzes (candidate set) aufweist, wobei eine Nachschlagtabelle (look-up table) des Kandidatensatzes für jeden Unterblock bereitgestellt sein kann.

**6.** Verfahren nach einem der vorgehenden Ansprüche, wobei bei der Klassifizierung der Blöcke als bedeckt und unbedeckt oder weder bedeckt noch unbedeckt die Blöcke als bedeckt und unbedeckt klassifiziert werden, die die folgenden Gleichungen erfüllen:

$$d_{diff} = d(x + \lambda d_{glob}) - d(x - \lambda d_{glob}),$$

wobei,

- wenn $d_{diff} \bullet d_{glob} < 0$ und $\sum_{x \in B} \left| I(x - \alpha d, t) - I(x + (1 - \alpha)d, t + 1) \right| > T_{occ} \rightarrow$ wird der Block als bedeckt klassifiziert

oder

- wenn $d_{diff} \bullet d_{glob} > 0$ und $\sum_{x \in B} \left| I(x - \alpha d, t) - I(x + (1 - \alpha)d, t + 1) \right| > T_{occ} \rightarrow$ wird der Block als unbedeckt klassifiziert,

wobei • das Skalarproduktvon Vektoren ist.

**7.** Verfahren nach Anspruch 6, mit, bei dem Bereitstellen einer bidirektionalen bewegungskompensierten Bildinterpolation für jeden Block, zumindest einem oder mehreren, in beliebiger Kombination, der Folgenden:

falls der Block weder als bedeckt noch als unbedeckt zugeordnet wird, dann:

$$I(x, t + 0.5) = 0.5 * (I(x - d_{bi}, t) + I(x + d_{bi}, t + 1))$$

falls der Block als bedeckt zugeordnet wird,
Aktualisieren von $d \leftarrow d_c$
wobei $d_c$ ein Bewegungsvektor ist, der einen verlässlichen bidirektionalen Übereinstimmungsfehler aufweist, oder einen Übereinstimmungsfehler unterhalb eines definierten Schwellenwerts, in einem aktualisierten Bewegungsvektorkandidatensatzes, aufweist, der sich in entgegengesetzter Richtung eines globalen Bewegungsvektors $d_{glob}$ befindet,
wobei der aktualisierte Bewegungsvektorkandidatensatz optional die Bewegungsvektoren eines Unterblockbereichs umfasst, der sich in entgegengesetzter Richtung eines globalen Bewegungsvektors $d_{glob}$ befindet,
falls der Block als unbedeckt zugeordnet wird,
Aktualisieren von $d \leftarrow d_c$

wobei $d_c$ der Bewegungsvektor ist, der gleichartig zu $d_{glob}$ ist und der einen verlässlichen bidirektionalen Übereinstimmungsfehler in einem aktualisierten Bewegungsvektorkandidatensatzes aufweist, der sich in Richtung von $d_{glob}$ befindet.

**8.** Verfahren nach einem der vorgehenden Ansprüche, wobei innerhalb der Vektoren, die die Bedingung $\|d_c - d_{glob}\| < T_{sim}$ erfüllen, der Vektor ausgewählt wird, der den geringsten bidirektionalen Übereinstimmungsfehler aufweist.

**9.** Vorrichtung für bewegungskompensierte Interpolation, mit:

- Mittel (1) zum Empfangen von zwei konsekutiven Bildern, das vorangegangene f(n) und das nachfolgende Bild f(n+1) des zu interpolierenden f(n+$\alpha$) Bildes,
- Mittel (2) zum Erzeugen eines Bewegungsvektorenfelds durch Anwenden einer bidirektionalen Bewegungseinschätzung zwischen dem vorangegangenen und dem nachfolgenden Bild mit einer Referenzzeit des zu interpolierenden Bilds,
- Mittel (4) zum Erzeugen einer globalen Bewegungseinschätzung, basierend auf dem erzeugten Bewegungsvektorenfeld und Mittel zum Verwenden der globalen Bewegungseinschätzung als Hintergrundbewegungseinschätzung,
- Mittel (6) zum Klassifizieren der Blöcke als bedeckt und unbedeckt oder als weder bedeckt noch unbedeckt, und
- Mittel zum Aktualisieren der Bewegungseinschätzungen von bedeckten und unbedeckten Blöcken entsprechend der generierten globalen Bewegungseinschätzung,
- Mittel zum Aktualisieren der Bewegungseinschätzungen von weder bedeckten noch unbedeckten Blöcken entsprechend des generierten Bewegungsvektorenfelds, und
- Mittel (8) zum Erzeugen des entsprechend der aktualisierten Bewegungseinschätzungen jedes Blocks zu interpolierenden Bilds, **gekennzeichnet durch**
- Mittel zum Erzeugen einer pyramidalen Struktur über dem Bewegungsvektorfeld der bidirektionalen Bewegungseinschätzung, wobei jeder Block der höheren Ebene der pyramidalen Struktur mit einer Gruppe von Blöcken der niedrigeren Ebene verbunden ist,
- Mittel zum separaten Anwenden einer Medianfilterung auf x- und y-Komponenten von Vektoren der Gruppe von Blöcken der unteren Ebene, um Bewegungsvektorfelder einer höheren Ebene der pyramidalen Struktur zu erzeugen, und
- Mittel zum Bereitstellen eines Einzelbewegungsvektors $d_{glob}$ an der Spitze der pyramidalen Struktur, der als die globale Bewegungseinschätzung verwendet wird.

10. Vorrichtung nach Anspruch 9, wobei das Mittel (4) zum Erzeugen einer globalen Bewegungseinschätzung Mittel zum Erzeugen einer globalen Bewegungsvektoreinschätzung umfasst.

11. Vorrichtung nach Anspruch 9 oder 10, mit einem Mittel (5) zum Bereitstellen einer Bewegungsvektorfeldverfeinerung, wobei das Mittel zum Bereitstellen der Bewegungsvektorfeldverfeinerung optional Mittel zum Unterteilen jedes Blocks in eine Anzahl von Unterblöcken auf jeder Verfeinerungsebene und zum Zuordnen des Bewegungsvektors des Unterblocks, der den geringsten Übereinstimmungsfehler innerhalb eines Kandidatensatzes aufweist, umfasst, wobei optional eine Nachschlagtabelle des Kandidatensatzes für jeden Unterblock bereitgestellt ist.

12. Vorrichtung nach einem der Ansprüche 9 bis 11, wobei das Mittel (6) zum Klassifizieren der Blöcke als bedeckt und unbedeckt oder weder bedeckt noch unbedeckt so ausgestaltet ist, die Blöcke, die die folgenden Gleichungen erfüllen, als bedeckt und unbedeckt zu klassifizieren:

$$d_{diff} = d(x + \lambda d_{glob}) - d(x - \lambda d_{glob}),$$

wobei,

- wenn $d_{diff} \bullet d_{glob} < 0$ und $\sum_{x \in B} |I(x - \alpha d, t) - I(x + (1 - \alpha)d, t + 1)| > T_{occ} \rightarrow$ wird der Block als bedeckt klassifiziert

oder

- wenn $d_{diff} \bullet d_{glob} > 0$ und $\sum_{x \in B} |I(x - \alpha d, t) - I(x + (1 - \alpha)d, t + 1)| > T_{occ} \rightarrow$ wird der Block als unbedeckt klassifiziert,

wobei • das Skalarprodukt von Vektoren ist.

13. Vorrichtung nach einem der Ansprüche 9 bis 12, mit einem Mittel (7), das ausgestaltet ist, eine bidirektionale bewegungskompensierte Bildinterpolation für jeden Block bereitzustellen, mit zumindest einem oder mehreren, in beliebiger Kombination, der Folgenden:

falls der Block weder als bedeckt noch als unbedeckt zugeordnet wird, dann:

$$I(x, t + 0.5) = 0.5 * (I(x - d_{bi}, t) + I(x + d_{bi}, t + 1))$$

falls der Block als bedeckt zugeordnet wird,
Aktualisieren von $d \leftarrow d_c$
wobei $d_c$ ein Bewegungsvektor ist, der einen verlässlichen bidirektionalen Übereinstimmungsfehler aufweist, oder einen Übereinstimmungsfehler unterhalb eines definierten Schwellenwerts, in einem aktualisierten Bewegungsvektorkandidatensatzes, aufweist, der sich in entgegengesetzter Richtung eines globalen Bewegungsvektors $d_{glob}$ befindet,
wobei der aktualisierte Bewegungsvektorkandidatensatz optional die Bewegungsvektoren eines Unterblockbereichs umfasst, der sich in entgegengesetzter Richtung eines globalen Bewegungsvektors $d_{glob}$ befindet,
falls der Block als unbedeckt zugeordnet wird,
Aktualisieren von $d \leftarrow d_c$
wobei $d_c$ der Bewegungsvektor ist, der gleichartig zu $d_{glob}$ ist und der einen verlässlichen bidirektionalen Übereinstimmungsfehler in einem aktualisierten Bewegungsvektorkandidatensatzes aufweist, der sich in Richtung von $d_{glob}$ befindet,
wobei der aktualisierte Bewegungsvektorkandidatensatz optional die Bewegungsvektoren eines Unterblockbereichs umfasst, der sich in entgegengesetzter Richtung eines globalen Bewegungsvektors $d_{glob}$ befindet.

14. Computerprogramm-Produkt, mit Software zur bewegungskompensierten Interpolation, wobei die Software Software-Anteile zum Durchführen der Schritte nach einem der Ansprüche 1 bis 8 umfasst.

15. Computerprogramm-Produkt nach Anspruch 14, auf einem von einem Computer lesbaren Medium.

**Revendications**

1. Procédé pour une interpolation compensée en mouvement comprenant :

   - la réception de deux trames consécutives, la trame précédente f(n) et la trame suivante f(n+1) par rapport à la trame à interpoler f(n+α),
   - la génération d'un champ de vecteur de mouvement en effectuant une estimation de mouvement bidirectionnel entre la trame précédente et suivante avec une synchronisation de référence de la trame à interpoler,
   - la génération d'une estimation de mouvement global sur la base du champ de vecteur de mouvement généré,
   - l'utilisation de l'estimation de mouvement global comme une estimation de mouvement d'arrière-plan,
   - le classement des blocs comme couverture et non couverture ou ni couverture ni non couverture,
   - la mise à jour des estimations de mouvement de blocs de couverture et de non couverture en fonction de l'estimation de mouvement global générée ;
   - la mise à jour des estimations de mouvement de blocs ni de couverture et ni de non couverture en fonction du champ de vecteur de mouvement généré ;
   - la génération de la trame à interpoler en fonction d'estimations de mouvement mises à jour de chaque bloc
   - **caractérisé en ce que** la génération de ladite estimation de mouvement global comprend les étapes suivantes :
   - la génération d'une structure pyramidale au-dessus du champ de vecteur de mouvement de l'estimation de mouvement bidirectionnel, dans lequel chaque bloc au niveau supérieur de la structure pyramidale est connecté à un groupe de blocs au niveau inférieur,
   - l'application d'un filtrage médian sur des composantes x et y de vecteurs dans le groupe de blocs au niveau inférieur séparément pour générer des champs de vecteur de mouvement de niveau supérieur de la structure pyramidale, et
   - la fourniture au sommet de la structure pyramidale d'un unique vecteur de mouvement $d_{glob}$, qui est utilisé comme l'estimation de mouvement global.

2. Procédé selon la revendication 1, dans lequel l'estimation de mouvement bidirectionnel est une estimation de mouvement de recherche intégrale basée sur les blocs.

3. Procédé selon la revendication 1 ou 2, dans lequel la génération d'une estimation de mouvement global comprend la génération d'une estimation de vecteur de mouvement global.

4. Procédé selon l'une quelconque des revendications précédentes, comprenant la fourniture d'une amélioration de champ de vecteur de mouvement.

5. Procédé selon la revendication 4, dans lequel l'amélioration de champ de vecteur de mouvement est fournie en divisant chaque bloc en une pluralité de sous-blocs à chaque niveau d'amélioration et l'attribution du vecteur de mouvement du sous-bloc qui a la moindre erreur de correspondance parmi un ensemble de candidats, dans lequel une table de recherche de l'ensemble de candidats pour chaque sous-bloc peut être fournie.

6. Procédé selon l'une quelconque des revendications précédentes, dans lequel, dans le classement des blocks comme de couverture et de non couverture ou ni de couverture ni de non couverture, des blocs sont classés comme de couverture et de non couverture qui satisfont les équations suivantes :

$$d_{diff} = d(x + \lambda d_{glob}) - d(x - \lambda d_{glob}),$$

dans lequel,

- si $d_{diff} \cdot d_{glob} < 0$ et $\sum_{x \in B}|I(x-\alpha d,t)-I(x+(1-\alpha)d,t+1)|>T_{occ}\rightarrow$le bloc est classé comme de couverture,

ou

- si $d_{diff} \cdot d_{glob} > 0$ et $\sum_{x \in B}|I(x-\alpha d,t)-I(x+(1-\alpha)d,t+1)|>T_{occ}\rightarrow$le bloc est classé comme de non couverture,

dans lequel • est un produit de vecteurs.

7. Procédé selon la revendication 6, comprenant, dans la fourniture d'une interpolation de trame compensée en mouvement bidirectionnel pour chaque bloc, au moins un ou plusieurs, dans n'importe quelle combinaison arbitraire, des éléments suivants :

si le bloc n'est assigné ni comme couverture ni comme de non couverture alors

$$I(x,t+0,5) = 0,5*(I(x-d_{bi},t) + I(x+d_{bi},t+1))$$

si le bloc est assigné comme de couverture,
mettre à jour $d \leftarrow d_c$ où $d_c$ est un vecteur de mouvement qui a une erreur de correspondance bidirectionnelle fiable, ou une erreur de correspondance au-dessous d'un seuil défini, parmi un ensemble de mise à jour de candidats de vecteurs de mouvement situé dans la direction inverse d'un vecteur de mouvement global $d_{glob}$, dans lequel l'ensemble de mise à jour de candidats de vecteurs de mouvement comprend facultativement les vecteurs de mouvement d'une région de sous-bloc située dans la direction inverse d'un vecteur de mouvement global $d_{glob}$,
si le bloc est assigné comme de non couverture,
mettre à jour $d \leftarrow d_c$ où $d_c$ est le vecteur de mouvement qui est similaire à $d_{glob}$ et a une erreur de correspondance bidirectionnelle fiable parmi un ensemble de mise à jour de candidats de vecteurs de mouvement situé dans la direction du $d_{glob}$.

8. Procédé selon l'une quelconque des revendications précédentes, dans lequel, parmi les vecteurs satisfaisant une condition $\|d_c-d_{glob}\|<T_{sim}$, le vecteur ayant la moindre erreur de correspondance bidirectionnelle est sélectionné.

9. Dispositif pour une interpolation compensée en mouvement comprenant :

- des moyens (1) pour recevoir deux trames consécutives, la trame précédente f(n) et la trame suivante f(n+1) par rapport à la trame à interpoler f(n+$\alpha$),
- des moyens (2) pour générer un champ de vecteur de mouvement en effectuant une estimation de mouvement bidirectionnel entre la trame précédente et suivante avec une synchronisation de référence de la trame à interpoler,
- des moyens (4) pour générer une estimation de mouvement global sur la base du champ de vecteur de mouvement généré et des moyens pour utiliser l'estimation de mouvement global comme une estimation de mouvement d'arrière-plan,
- des moyens (6) pour classer les blocs comme couverture et non couverture ou ni couverture ni non couverture, et
- des moyens pour mettre à jour les estimations de mouvement de blocs de couverture et de non couverture en fonction de l'estimation de mouvement global générée ;
- des moyens pour mettre à jour les estimations de mouvement de blocs ni de couverture et ni de non couverture en fonction du champ de vecteur de mouvement généré, et
- des moyens (8) pour générer la trame à interpoler en fonction d'estimations de mouvement mises à jour de chaque bloc **caractérisé par**
- des moyens pour générer une structure pyramidale au-dessus du champ de vecteur de mouvement de l'estimation de mouvement bidirectionnel, dans lequel chaque bloc au niveau supérieur est connecté à un groupe de blocs au niveau inférieur,
- des moyens pour appliquer un filtrage médian sur des composantes x et y de vecteurs dans le groupe de blocs au niveau inférieur séparément pour générer des champs de vecteur de mouvement de niveau supérieur de la structure pyramidale, et

- des moyens pour fournir au sommet de la structure pyramidale d'un unique vecteur de mouvement $d_{glob}$, qui est utilisé comme l'estimation de mouvement global.

10. Dispositif selon la revendication 9, dans lequel les moyens (4) pour générer une estimation de mouvement global comprennent des moyens pour générer une estimation de vecteur de mouvement global.

11. Dispositif selon la revendication 9 ou 10, comprenant des moyens (5) pour fournir une amélioration de champ de vecteur de mouvement, dans lequel les moyens pour fournir l'amélioration de champ de vecteur de mouvement comprennent facultativement des moyens pour diviser chaque bloc en une pluralité de sous-blocs à chaque niveau d'amélioration et l'attribution du vecteur de mouvement du sous-bloc qui a la moindre erreur de correspondance parmi un ensemble de candidats,
dans lequel une table de recherche de l'ensemble de candidats pour chaque sous-bloc peut être fournie facultativement.

12. Dispositif selon l'une quelconque des revendications 9 à 11, dans lequel les moyens (6) pour classer les blocks comme de couverture et de non couverture ou ni de couverture ni de non couverture, sont configurés pour classer des blocs comme de couverture et de non couverture qui satisfont les équations suivantes :

$$d_{diff} = d(x + \lambda d_{glob}) - d(x - \lambda d_{glob}),$$

dans lequel,

- si $d_{diff} \cdot d_{glob} < 0$ et $\sum_{x \in B} |I(x-\alpha d,t)-I(x+(1-\alpha)d,t+1)| > T_{occ} \rightarrow$ le bloc est classé comme de couverture,

ou

- si $d_{diff} \cdot d_{glob} > 0$ et $\sum_{x \in B} |I(x-\alpha d,t)-I(x+(1-\alpha)d,t+1)| > T_{occ} \rightarrow$ le bloc est classé comme de non couverture,

dans lequel • est un produit de vecteurs.

13. Dispositif selon l'une quelconque des revendications 9 à 12, comprenant des moyens (7) configurés pour, dans la fourniture d'une interpolation de trame compensée en mouvement bidirectionnel pour chaque bloc, au moins un ou plusieurs, dans n'importe quelle combinaison arbitraire, des éléments suivants :

si le bloc n'est assigné ni comme couverture ni comme de non couverture alors

$$I(x,t+0,5) = 0,5*(I(x-d_{bi},t) + I(x+d_{bi},t+1))$$

si le bloc est assigné comme de couverture,
mettre à jour $d \leftarrow d_c$ où $d_c$ est un vecteur de mouvement qui a une erreur de correspondance bidirectionnelle fiable, ou une erreur de correspondance au-dessous d'un seuil défini, parmi un ensemble de mise à jour de candidats de vecteurs de mouvement situé dans la direction inverse d'un vecteur de mouvement global $d_{glob}$, dans lequel l'ensemble de mise à jour de candidats de vecteurs de mouvement comprend facultativement les vecteurs de mouvement d'une région de sous-bloc située dans la direction inverse d'un vecteur de mouvement global $d_{glob}$,
si le bloc est assigné comme de non couverture,
mettre à jour $d \leftarrow d_c$ où $d_c$ est le vecteur de mouvement qui est similaire à $d_{glob}$ et a une erreur de correspondance bidirectionnelle fiable parmi un ensemble de mise à jour de candidats de vecteurs de mouvement situé dans la direction du $d_{glob}$, dans lequel l'ensemble de mise à jour de candidats de vecteurs de mouvement comprend facultativement les vecteurs de mouvement d'une région de sous-bloc située dans la direction du vecteur de mouvement global $d_{glob}$.

14. Produit de programme informatique, comprenant un logiciel pour une interpolation compensée en mouvement, le logiciel comprenant des portions de logiciel pour exécuter les étapes selon l'une quelconque des revendications 1 à 8.

**15.** Produit de programme informatique selon la revendication 14, mis en oeuvre sur un support lisible par ordinateur.

**Figure 1**

**Figure 2**

**Figure 3**

$$S_1 \leftarrow \{S_1, B_1, B_2, B_4\}$$
$$S_2 \leftarrow \{S_2, B_2, B_3, B_5\}$$
$$S_3 \leftarrow \{S_3, B_4, B_6, B_7\}$$
$$S_4 \leftarrow \{S_4, B_5, B_7, B_8\}$$

**Figure 4**

Candidates

Uncover block

$d_{glob}$

**Figure 5**

Candidates

Cover block

$d_{glob}$

**Figure 6**

Bidirectional
Motion Estimation

Generate Pyramidal
Structure

Refine Motion
Vector Field

Classify Blocks as

Cover and Uncover

Bidirectional Motion-Compensated
Frame Interpolation

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7058227 A
- US 6219436 B
- US 6771799 B
- US 7058227 B
- US 6487313 B
- WO 2007119183 A
- US 6005639 A
- WO 2004066624 A1
- US 6845130 B1

**Non-patent literature cited in the description**

- **G. DE HAAN ; P.W.A.C BIEZEN ; H. HUIJGEN ; O.A. OJO.** True Motion Estimation with 3-D Recursive Search Block-Matching. *IEEE Tr. on Circuits and Systems for Video Technology,* October 1993, vol. 3, 368-388
- **BARTELS EINDHOVEN UNIV OF TECHNOLOGY (NETHERLANDS) C et al.** Occlusion classifiers for picture rate conversion. *VISUAL COMMUNICATIONS AND IMAGE PROCESSING,* 20 January 2009